# EUROPÄISCHE PATENTSCHRIFT

(11) **EP 1 285 409 B1**
(45) Veröffentlichungstag und Bekanntmachung des Hinweises auf die Patenterteilung: **11.05.2005**
(21) Anmeldenummer: 00925008.5
(22) Anmeldetag: 16.05.2000
(51) Int. Cl.: G07C 9/00

(54) **BIOMETRISCHES IDENTIFIZIERUNGS- UND AUTHENTIFIZIERUNGSVERFAHREN**
BIOMETRIC METHOD FOR IDENTIFICATION AND AUTHORISATION
PROCEDE D'IDENTIFICATION ET D'AUTHENTIFICATION BIOMETRIQUE

(43) Veröffentlichungstag der Anmeldung: 26.02.2003
(73) Patentinhaber: Swisscom Mobile AG, 3050 Bern (CH)
(72) Erfinder: LAUPER, Eric, CH-3014 Bern (CH); HUBER, Adriano, CH-6600 Locarno (CH)
(74) Vertreter: P&TS Patents & Technology Surveys SA
(86) Internationale Anmeldenummer: PCT/CH2000/000270
(87) Internationale Veröffentlichungsnummer: WO 2001/088857

(56) Entgegenhaltungen:
- WO-A-97/46978
- WO-A-98/08439
- WO-A-99/24938
- DE-A- 19 810 792
- US-A- 4 641 349

## Beschreibung

Die vorliegende Erfindung betrifft ein biometrisches Identifizierungs- und Authentifizierungsverfahren. Die vorliegende Erfindung betrifft insbesondere ein Verfahren, welches erlaubt, Benutzer mit augenbasierenden Merkmalen zu identifizieren und/oder zu authentifizieren.

Es sind schon verschiedene Verfahren bekannt, um die Identität eines Benutzers in einem Kommunikationsnetz zu ermitteln. Oft wird vom Benutzer verlangt, dass er selbst seine Identität eingibt; meistens wird ein Passwort verlangt, damit nur der berechtigte Benutzer diese Identität im Netz verwenden kann. Es ist jedoch schwierig, sich an viele verschiedene Passwörter für verschiedene Anwendungen zu erinnern. Die Eingabe von Passwörtern mit Terminals, die nur über eine kleine Tastatur verfügen (beispielsweise mit Mobilfunktelefonen oder mit Palmtops) ist ausserdem umständlich und fehleranfällig.

Es ist auch bekannt, ein Identifizierungsmodul (beispielsweise in der Form einer Chipkarte) zu verwenden, in welchem die Identität des Benutzers, beispielsweise im Fall eines Mobilfunknetzes seine IMSI (International Mobile Subscriber ldentity), in einem gesicherten Gebiet abgelegt ist. Diese Identität erlaubt jedoch nur eine Identifizierung der verwendeten Chipkarte. Wird das selbe Modul von mehreren Benutzern verwendet (beispielsweise wenn mehrere Benutzer das selbe Mobilfunktelefon verwenden) kann mit diesem Verfahren die Identität des tatsächlichen Benutzers des Terminals nicht ermittelt werden.

Es wurden auch sogenannte biometrische Identifizierungsverfahren vorgeschlagen, die erlauben, die Identität eines Benutzers anhand von persönlichen Körpermerkmalen (beispielsweise Fingerabdrücke, Sprachmerkmale, Iris- oder Retina-Muster usw.) zu ermitteln. Ein Beispiel eines solchen Verfahren ist in der Patentanmeldung W099/24938 beschrieben.

Fingerabdrücke, Iris- und Retina-Muster können mit einem biometrischen Sensor (beispielsweise mit einer Kamera) ermittelt werden. Der Sensor liefert eine Bilddatei, die mit in einer Referenzdatenbank abgelegten Referenzbildem verglichen wird. Es sind verschiedene Verfahren bekannt, um die ermittelte Bilddatei mit abgelegten Referenzen in der Datenbank zu vergleichen und um die am besten passende Musterdatei zu finden.

Solche Bilddateien sind jedoch relativ gross und müssen vor der Übertragung zur Referenzdatenbank komprimiert werden, damit die Obertragungszeit nicht zu lang wird. Diese Komprimierung ist jedoch zeitaufwendig und verlangt eine nicht immer vorhandene Rechnungsleistung; die komprimierte Datei ist für eine schnelle und billige Übertragung oft immer noch zu gross. Ausserdem ist der Bildvergleichsprozess in der Referenzdatenbank sehr zeitaufwendig.

Ähnliche Lösungen, die ähnliche Probleme aufweisen, werden auch für die Authentifizierung von Benutzern in einem Kommunikationsnetz verwendet, das heisst für die Prüfung der Identität eines bereits identifizierten Benutzers.

DE19810792 beschreibt ein Verfahren zum verifizieren der Authentizität eines Bildes. Eine Sequenz von zeitlich aufeinanderfolgenden Einzelbildern des Gesichts des Benutzers wird aufgenommen und nur dann als authentisch betrachtet, wenn wenigstens in zwei aufeinanderfolgenden Bildern der Sequenz intrinsische Bewegungen ermittelt werden. Ein Einzelbild wird dann mit einem Referenzbild verglichen, um die Authentizität des Benutzers zu prüfen. Auch in diesem Verfahren werden relativ grosse Bilddateien verwendet.

US4641349 beschreibt ein ähnliches Verfahren, in welchem statt das gesamte Gesicht nur die Iris aufgenommen wird. Die Bilddatei der Iris wird mit Referenzbildern verglichen. Auch hier wird mit relativ grossen Bilddateien gearbeitet.

W09746978 beschreibt eine Vorrichtung, um ein Bild der Iris eines Benutzers aufzunehmen und als sogenannte Iriskodes zu kodieren, die an einen Fernserver übermittelt werden. Die Kodierung ist aber auch zeitintensiv und verbraucht viele Rechnerressourcen im Terminal.

Es ist eine Aufgabe dieser Erfindung, ein neues und besseres Verfahren anzubieten, um den Benutzer eines Terminals zu identifizieren, und/oder um die Identität eines Benutzers zu prüfen (Authentifikation).

Ein anderes Ziel ist es, ein neues biometrisches Verfahren anzubieten, um einen Benutzer in einem Kommunikationsnetz unabhängig vom verwendeten Terminal zu identifizieren.

Ein anderes Ziel ist, ein neues biometrisches Identifizierungs- und Authentifizierungs-Verfahren anzubieten, das Vergleichsdaten mit einer relativ kleinen Grösse erzeugt.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass der Benutzer durch Ermittlung von persönlichen unwillkürlichen Augenbewegungsmustern mit einem Augenbewegungsbestimmungsmodul identifiziert und/oder authentifiziert wird.

Unwillkürliche Augenbewegungen (beispielsweise die Trajektorie des Auges beim Scanning eines Bildes) sind von persönlichen neurologischen Verbindungen zwischen verschiedenen Vorstellungsfunktionen im neurologischen System und zwischen verschiedenen neuralen Strukturen abhängig. Jede Person scannt ein Bild mit den Augen auf eine sehr persönliche Art, manche schneller, andere mit mehr Saccaden, usw. Manche Betrachter blinzeln öfter als andere, oder als Reaktion auf andere Ereignisse (beispielsweise auf Änderungen der Lichtverhältnisse oder auf emotionale Zustände). Auch Variationen im Pupillendiameter ergeben persönliche Muster.

Durch Ermittlung dieser unwillkürlichen Augenbewegungsmuster (beispielsweise mit einem Augenbewegungsbestimmungsmodul) lassen sich somit Vergleichsdaten bestimmen, die den Betrachter eindeutig identifizieren und/oder mit welchen die Benutzeridentität geprüft werden kann.

Dies hat den Vorteil, dass die ermittelten Vergleichsdaten relativ klein sind und somit sehr schnell und kostengünstig übertragen werden können. Ausserdem kann das erfindungsgemässe Verfahren nur schwer betrogen werden.

Wird dieses Verfahren mit Terminals, die schon über ein Augenblickrichtungsbestimmungsmodul verfügen, angewendet, kann es mit einem relativ geringem Aufwand durchgeführt werden. im Vergleich zu Systemen, die ein Bild der Iris oder der Retina aufnehmen, ist das erfindungsgemässe Verfahren nur wenig intrusiv. Das Augenblickrichtungsbestimmungsmodul kann beispielsweise eine Kamera verwenden, die sich nicht unbedingt in unmittelbarer Nähe des Benutzerauges befinden muss.

Nachfolgend wird eine Ausführung der vorliegenden Erfindung anhand eines Beispiels beschrieben. Das Beispiel der Ausführung wird durch folgende beigelegten Figuren illustriert:
Figur 1 zeigt ein Blockdiagramm, in welchem schematisch einerseits ein erfindungsgemässes Terminal und andererseits ein erfindungsgemässer Server, der über ein Kommunikationsnetz mit diesem Terminal verbunden ist, illustriert werden.
Figur 2 zeigt ein Beispiel der Augentrajektorie eines Benutzers, der ein Bild mit einer virtuellen retinalen Vorrichtung betrachtet.
Figur 3 zeigt ein Beispiel eines Bildes, das dem Benutzer vorgestellt werden kann.

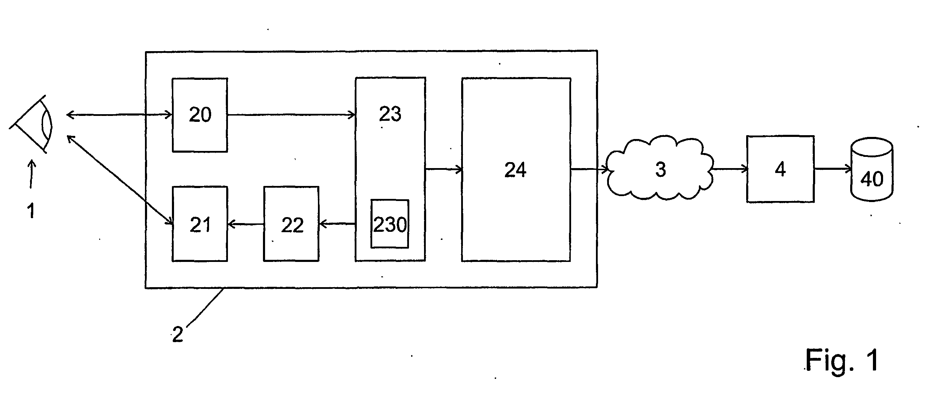

In der Figur 1 bezieht sich die Bezugsziffer 1 auf den Benutzer eines Terminals 2, mit welchem Transaktionen über ein Kommunikationsnetz 2 mit einem Fernserver 4 durchgeführt werden können. Das Terminal 2 ist vorzugsweise tragbar und kann in einer bevorzugten Variante aus einem Mobilfunktelefon, aus einem Palmtop, aus einem Laptop oder aus einer Kombination von verschiedenen miteinander verbundenen Komponenten bestehen, wobei die Verbindung vorzugsweise über eine PC-Card, IrDA oder Bluetooth Schnittstelle erfolgen kann. In einer bevorzugten Variante enthält das Terminal eine nicht dargestellte Chipkarte, beispielsweise eine SIM-Karte (Subscriber Identification Module), in welcher benutzerspezifischen Daten abgelegt sind.

Das Terminal enthält ein Modul 20 zur Bestimmung von Augenbewegungen. Das Modul 20 besteht beispielsweise aus einem Augenblickrichtungsbestimmungsmodul (Eye Tracker), welches die aktuelle Betrachtungsrichtung basierend auf der Position der Pupille und/oder des Kopfes des Benutzers 1 bestimmen kann. Solche Augenblickrichtungsbestimmungsmodule wurden unter anderem in der Patentanmeldung W094/09472 beschrieben. Vorzugsweise kann das Modul 20 verschiedene Typen von unwillkürlichen Augenbewegungen bestimmen, beispielsweise Blinzeln, wie in der Patentanmeldung GB2281838 beschrieben, Variationen im Diameter der Pupille, usw. Je nach Variante können entweder Bewegungen nur eines Auges oder beider Augen ermittelt werden; in diesem letzten Fall können auch schielende Augenbewegungen ermittelt werden.

Es sind auch andere Systeme zur Ermittlung von Augenbewegungen bekannt, die auch in speziellen Kontaktlinsen montiert werden, oder die ein Videobild des Auges aufnehmen. Eine schnellere Abtastrate wurde mit Laserscannern erreicht, die die Iris bis zu 200 Mal pro Sekunde abscannen.

Damit das Terminal nur auf Bewegungen von lebenden Wesen reagiert und nicht beispielsweise durch Vorstellung von animierten Bildern betrogen werden kann, werden vorzugsweise vom Modul 20 Körperreaktionen ermittelt. In einer bevorzugten Variante wird ein von der Körpertemperatur abhängiger Parameter gemessen, beispielsweise die Reaktion der Retina auf eine durch das Terminal 2 verursachte Erwärmung. In einer anderen Variante wird die Reaktion der Iris auf durch das Terminal 2 verursachte Lichtvariationen ermittelt. Auf diese Weise kann geprüft werden, ob das ermittelte Bild des Auges wirklich zu einem Menschen gehört.

Das Terminal 2 umfasst vorzugsweise Bildwiedergabemittel 21, die sichtbare Bilder für den Benutzer 1 wiedergeben können. In einer ersten Variante bestehen die Bildwiedergabemittel 21 aus einer konventionellen Anzeige, beispielsweise aus einer CRT-, Flüssigkristall- oder Plasma-Anzeige. In einer bevorzugten Variante bestehen sie aus einem sogenannten Microdispläy mit einem passenden Linsensystem, vorzugsweise aus einer virtuellen retinalen Anzeigevorrichtung (VRD, Virtual Retinal Display), die das dargestellte Bild direkt auf die Retina eines oder beider Augen des Benutzers 1 projiziert.

Virtuelle retinale Anzeigevorrichtungen wurden beispielsweise in den Patentanmeldungen W094/09472, W097/37339 und W098/13720 beschrieben und brauchen demzufolge nicht mehr beschrieben zu werden. Die VRD-Vorrichtung 21 wird von einem Videokontroller 22 gesteuert, um Bildsignale, die einem zweidimensionalen oder dreidimensionalen Bild entsprechen, auf die Fovea des Benutzerauges zu projizieren.

Das Terminal 2 wird von Datenverarbeitungsmitteln 23, beispielsweise in der Form eines Prozessors 23 mit einem nicht dargestellten Speicherbereich, gesteuert. Der Prozessor 23 steuert insbesondere den Videokontroller 22 und bearbeitet die Daten vom Augenteil-Bewegungsbestimmungsmodul 20. Ein Software und/oder Hardware-Modul 230 im Prozessor 23 oder verbunden mit diesem Prozessor, ist für die Sicherung der Datenübertragung mit externen Vorrichtungen 4 zuständig, wie später erläutert.

Der Fachmann wird verstehen, dass die Datenverarbeitungsmittel 23 und das Sicherheitsmodul 230 aus einem einzigen Chip hergestellt werden können, oder aus einer Vielzahl von miteinander logisch verbundenen Komponenten. In einer bevorzugten Variante, in welcher das Terminal 2 aus einem Mobiltelefon besteht, umfassen die Datenverarbeitungsmittel 23 vorzugsweise Komponenten im Mobiltelefon sowie Komponenten in der entfernbaren Chipkarte (SIM-Karte), die mit diesem Mobiltelefon verbunden wird. In einer bevorzugten Variante befinden sich insbesondere sicherheitskritische Komponenten, die vom Sicherheitsmodul 230 verwendet werden, in der Chipkarte.

Das Terminal umfasst ausserdem einen Kommunikationsteil 24, mit welchem es sich mit einem Kommunikationsnetz 3 verbinden kann. Das Kommunikationsteil 24 besteht vorzugsweise aus einem GSM oder UMTS-Kommunikationsteil, aus einem Modem, oder aus einer kontaktlosen Schnittstelle im Nahbereich, beispielsweise gemäss IrDA, Bluetooth, HomeRF oder DECT.

Das Kommunikationsnetz 3 ist beispielsweise ein Mobilfunknetz, beispielsweise gemäss GSM oder UMTS, könnte aber auch das Internet sein oder aus mehreren Netzen bestehen. Über das Kommunikationsnetz 3 kann sich das Terminal 2 mit einem zentralen Fernserver 4 verbinden, beispielsweise mit einem http oder WAP-Server, der vom Betreiber des Kommunikationsnetzes 3 und/oder von einem Dienstanbieter verwaltet wird. Die Datenübertragung zwischen dem Terminal 2 und dem Fernserver 4 wird vorzugsweise End-zu-End gesichert, beispielsweise mit dem Protokoll SSL (Secure Sockets Layer), TLS (Transport Layer Security) und/oder WTLS (Wireless Transport Layer Security). Daten, die vom Terminal 2 zum Server 4 gesendet werden, werden vorzugsweise vom Sicherheitsmodul 230 elektronisch signiert, vorzugsweise mit einem elektronischen privaten Schlüssel, der in einem elektronischen Zertifikat in der SIM-Karte abgelegt ist.

Das Terminal 2 umfasst vorzugsweise zusätzliche nicht dargestellte Dateneingabemittel, beispielsweise eine Tastatur, eine Maus, ein Rollelement, ein Mikrophon, usw., mit welchen der Prozessor 23 gesteuert werden kann.

Der Benutzer 1 kann eine Session mit dem Server 4 aufbauen, indem er die entsprechende URL-Adresse oder Telefonnummer in sein Terminal 2 eingibt. Eine Session kann beispielsweise aufgebaut werden, um eine Transaktion zwischen dem Benutzer 1 und dem Dienstanbieter der den Server betreibt, durchzuführen, beispielsweise um ein Produkt oder eine Dienstleistung des Dienstanbieters 4 zu bestellen und/oder zu bezahlen.

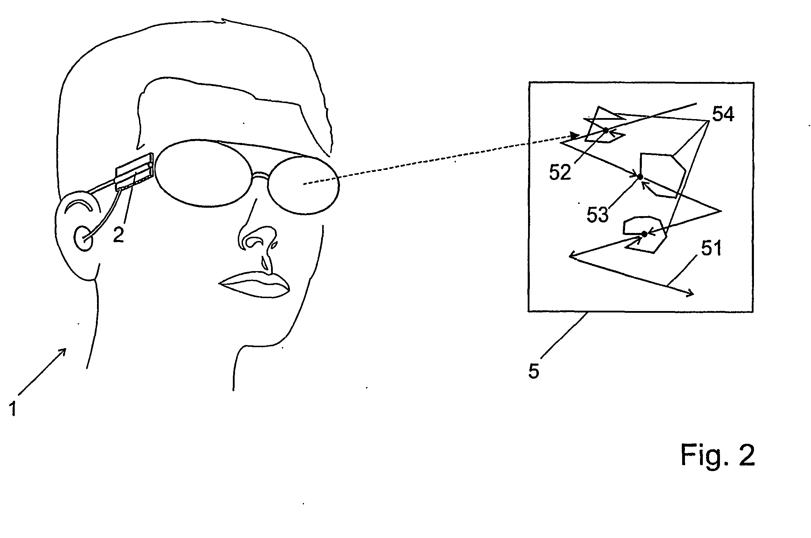

Die Figur 2 zeigt schematisch einen Benutzer 1 mit einer Ausführungsvariante des erfindungsgemässen Terminals, das hier in einer Brille integriert ist. Die Brille enthält das Mobilfunkteil 24, die VRD-Anzeigevorrichtung 21, die Bilder auf die Retina des Benutzers 1 projizieren kann, den Prozessor 23 und das Eye-Trackingssystem 20. Das Bezugszeichen 5 zeigt ein Beispiel der Trajektorie eines Auges beim Scanning eines dem Benutzers vorgestellten Bildes 5.

Damit eine Transaktion zwischen dem Benutzer 1 und dem Server 4 durchgeführt wird, muss der Benutzer 1 identifiziert werden. Das verwendete Terminal 2 kann relativ leicht anhand der übermittelten Anrufer-Nummer (MSISDN) oder der in der Chipkarte im Terminal abgelegten Nummer (IMSI, International Mobile Subscriber Identification) identifiziert werden; diese Identität kann auch mit einer elektronischen Signatur der Transaktionsbelege ermittelt werden.

Wird das Terminal 2 von mehreren Personen bedient (beispielsweise von mehreren Familienmitgliedern), reicht die abgelegte Identifizierung nicht aus, um die Person, die das Terminal 2 tatsächlich benutzt, zu identifizieren; nur die Chipkarte wird identifiziert, nicht der aktuelle Benutzer dieser Karte. Wird das Terminal 2 gestohlen oder von einer nicht berechtigten Person verwendet, muss für sicherheitskritische Transaktionen die übermittelte Identität authentifiziert werden.

Erfindungsgemäss wird dieser Identifizierungs- und Authentifi- . zierungsprozess mit einem biometrischen Verfahren durchgeführt, in welchem persönliche unwillkürliche Augenbewegungsmuster ermittelt werden.

Mit dem Augenbewegungsbestimmungsmodul 20 können verschiedene Typen von unwillkürlichen Augenbewegungen ermittelt werden, die zur Identifikation und/oder Authentifikation des Benutzers dienen können; davon werden wir nur einige Beispiele beschreiben.

Beim Scanning eines Bildes bewegt sich das Auge entlang einer Trajektorie 51, von der ein Beispiel auf der Figur 2 dargestellt wird. Es wurde schon von Neurologen und Ärzten beobachtet, dass diese Trajektorie nicht linear ist; das Auge bleibt länger auf bestimmte Punkte 52, 53 gerichtet, bewegt sich dann schnell, bis es einen anderen Interessenpunkt findet, usw. Das Auge macht ausserdem schnelle, als Saccaden 54 bekannte Bewegungen, um das Randfeld wahrzunehmen. Um ein neues Bild zu scannen, macht das Auge grosse Saccaden, in der Regel von einer Kante zur anderen. Rund um eine Position macht das Auge auch sogenannten Microsaccaden, die lokal sind. Die Form, die Anzahl und das Auslösen der Saccaden sind persönlich und bilden somit ein Identifizierungs- und/oder Authentifizierungsmerkmal.

Die Trajektorie des Auges eines Benutzers 1 auf einem bestimmten Bild ist von der Physiologie des Auges, unter anderem von seiner Muskulatur, aber vor allem von neurologischen Strukturen des Benutzergehirns, abhängig. Sie ist somit absolut persönlich und kann verwendet werden, um den Benutzer zu identifizieren und/oder zu authentifizieren.

Erfindungsgemäss werden gewisse Merkmale dieser Trajektorie (beispielsweise die bevorzugte Scanningsrichtung, die durchschnittliche Scanningsgeschwindigkeit und/oder Beschleunigung, die Anzahl Betrachtungspunkte, die Zeit auf jedem Punkt, die Anzahl und Form der Microsaccaden und der grösseren Saccaden, die Entropie der Trajektorie, usw.) vom Augenbewegungsbestimmungsmodul und/oder vom Prozessor 23 ermittelt, um somit ein benutzerspezifisches Augenbewegungsmuster zu definieren, mit welchem der Benutzer identifiziert und/oder authentifiziert werden kann.

Der Prozessor 23 kann auch andere Bewegungsmuster ermitteln, beispielsweise Blinzelbewegungsmuster. Manche Benutzer blinzeln öfter als andere, oder als Reaktion auf andere Ereignisse. Wird dem Benutzer 1 ein dreidimensionales Bild vorgestellt, ist es auch möglich, die Akkomodation des Auges auf die Entfernung (Augenfokalisierungsmuster) zu ermitteln. Als Variante oder als zusätzlichen Parameter kann man die Variationen des Pupillendiameters (beispielsweise die Reaktionszeit, die Anpassungsgeschwindigkeit, den absoluten Wert, usw.) verwenden. Man wird verstehen, dass das ermittelte Augenbewegungsmuster auch Bewegungen beider Augen berücksichtigen kann. In einer bevorzugten Variante berücksichtigt das ermittelte Augenbewegungsmuster verschiedene Typen von Augenbewegungen.

Vorzugsweise wird dem Benutzer mit den Bildwiedergabemitteln 21 ein zwei- oder drei-dimensionales Bild 5 vorgestellt. Das Modul 20 ermittelt das benannte Augenbewegungsmuster während des Betrachtens dieses Bildes. Auf diese Weise wird das Augenbewegungsmuster mit einem bekannten Referenzbild ermittelt, so dass keine bildbedingte Mustervariationen auftreten.

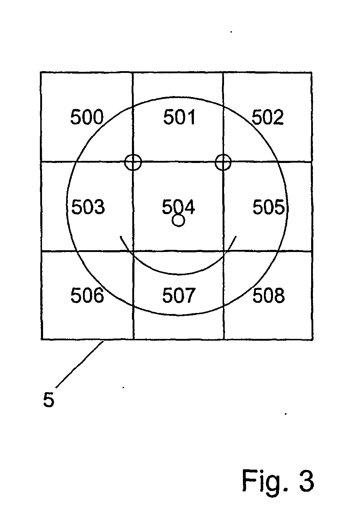

Das dem Benutzer vorgestellte Bild kann beispielsweise ein Logo oder ein Einleitungsbild des Dienstanbieters 4 enthalten, das dem Benutzer 1 bei jedem Zugriff auf den Server dieses Dienstanbieters vorgestellt wird. Ein Beispiel eines solchen Bildes ist auf der Figur 3 dargestellt. Das Bild ist in diesem Beispiel logisch in mehrere Bildbereiche 500 bis 507 aufgeteilt; das persönliche Augenbewegungsmuster kann dann auch Angaben enthalten, über jene Bereiche, auf die das Auge am längsten gerichtet ist, über die Reihenfolge der betrachteten Bildbereiche, usw.

Als Variante kann dem Benutzer 1 auch eine Sequenz von mehreren Bildern vorgestellt werden. Die Scanningstrajektorie über jedes Bild, die Variationen im Pupillendiameter bei Bildwechseln, das Blinzeln als Reaktion auf Änderungen der Lichtverhältnisse oder auf den Bildinhalt, usw. können dann verwendet werden, um den Benutzer zu identifizieren und/ oder zu authentifizieren. Somit können auch Augenbewegungen verursacht werden (beispielsweise indem spezielle Bilder oder Bildersequenzen vorgestellt werden) und die Reaktion auf diese Bilder oder Bildersequenzen (beispielsweise die Variationen des Pupillendiameters oder das Blinzeln) wird als Muster ermittelt.

Das ermittelte Augenbewegungsmuster wird dann vom Prozessor 23 codiert, um einen numerischen oder alphanumerischen Code zu errechnen, welcher den Benutzer 1 so eindeutig wie möglich identifiziert, und dessen Grösse minimal ist, damit er schnell übertragen wird. Die sich daraus ergebenden Vergleichsdaten werden dann über einen geeigneten Übertragungskanal (beispielsweise mit einem bekannten WAP-Bearer) vom Kommunikationsteil 24 an den Server 4 eines Dienstanbieters geleitet. Die Übertragung wird vorzugsweise End-zu-End gesichert; vorzugsweise werden die Vergleichsdaten noch von einem Sicherungsmodul 230 im Prozessor 23 oder in einer Chipkarte im Terminal 2 elektronisch signiert und mit dem öffentlichen Schlüssel des Dienstanbieters 4 verschlüsselt, damit nur dieser die Vergleichsdaten entschlüsseln und deren Herkunft prüfen kann.

Der Server 4 enthält oder greift auf eine Referenzdatenbank 40 zu, in welcher Augenbewegungsdaten aller registrierten Benutzer abgelegt sind. Diese Referenzdaten werden beispielsweise bei der Registration der Benutzer beim Dienstanbieter ermittelt und in der Datenbank 4 abgelegt.

Um den Benutzer 1 zu identifizieren, vergleicht der Server die erhaltenen Vergleichsdaten mit allen in der Datenbank 40 abgelegten Referenzdaten. Der Server ermittelt aus der Referenzdatenbank 40 die Identität des Benutzers mit jenen Referenzdaten, die den erhaltenen Vergleichsdaten am ähnlichsten sind. Diese Identität kann für weitere Transaktionen verwendet werden.

Der Vergleich zwischen den erhaltenen Vergleichsdaten und den abgelegten Referenzdaten kann beispielsweise mit einem Viterbi-Gitter durchgeführt werden, welches den wahrscheinlichsten Benutzer unter allen registrierten Benutzern angibt.

Oft ist es nicht notwendig, die erhaltenen Vergleichsdaten mit allen Referenzdaten in der Referenzdatenbank 40 zu vergleichen. Ist beispielsweise die Identifizierung des verwendeten Terminals 2 schon bekannt, kann der Server nur unter den gewöhnlichen Benutzern dieses Terminals (beispielsweise unter den Familienmitgliedern) recherchieren. Das erfindungsgemässe Verfahren kann somit eingesetzt werden, um den tatsächlichen aktuellen Benutzer des Terminals 2 unter allen autorisierten oder regelmässigen Benutzern des Terminals zu ermitteln.

Dieses Verfahren kann auch eingesetzt werden, um eine schon bekannte Identität zu prüfen (Authentifikation). Wurde die Benutzeridentität schon vom Benutzer selbst erfasst, kann mit einem Vergleich zwischen den erhaltenen Vergleichsdaten und den für diesen Benutzer in der Datenbank 40 abgelegten Referenzdaten entschieden werden, ob die eingegebene Identität plausibel ist.

Der Fachmann wird verstehen, dass der Vergleich zwischen den ermittelten und den abgelegten Daten auch im Terminal 2 erfolgen kann. In diesem Fall wird der Zugriff auf dieses Terminal oder auf bestimmte Funktionen oder Programme in diesem Terminal erst dann gewährleistet, wenn das Ergebnis dieses Vergleichs positiv ist, dass heisst wenn der mit seinen unwillkürlichen Augenbewegungen identifizierte und/oder authentifizierte Benutzer zugriffberechtigt ist.

Ebenso ist es möglich, in der Referenzdatenbank 40 nur eine abgeleitete Form des Augenbewegungsmusters zu speichern, die vor jedem Identifikations- oder Authentifikations-Vorgang an das Terminal 2 geleitet wird. Der Vergleich zwischen den ermittelten Vergleichsdaten und diesen Referenzdaten erfolgt dann im Terminal. Diese Variante hat den Vorteil, dass die eventuell datenschutzgeschützten persönlichen Referenzdaten nicht in der Referenzdatenbank 40 abgelegt sind.

Obwohl sich diese Beschreibung insbesondere auf den speziellen Fall der Identifikation und Authentifikation eines Benutzers eines Mobilfunktelefons bezieht, wird der Fachmann verstehen, dass das erfindungsgemässe Verfahren auch für die Identifikation und Authentifikation von Benutzern anderer Vorrichtungen verwendet werden kann. Beispielsweise kann man dieses Verfahren auch mit Rechnern verwenden, beispielsweise für Transaktionen mit dem Internet oder um den Zugriff auf Unternehmens-Server zu sichern.

## Patentansprüche

1. Biometrisches Identifizierung- und/oder Authentifizierungsverfahren, um den Benutzer (1) eines Terminals (2) zu identifizieren und/oder zu authentifizieren, **dadurch gekennzeichnet, dass** der benannte Benutzer durch Ermittlung von persönlichen Augenrichtungstrajektorien, einschliesslich unwillkürlicher Augenbewegungen, mit einem Augenbewegungsbestimmungsmodul (20) identifiziert und/oder authentifiziert wird.

2. Biometrisches Identifizierung- und/oder Authentifizierungsverfahren gemäss dem vorhergehenden Anspruch, in welchem dem Benutzer (1) mindestens ein vordefiniertes Bild (5) vorgestellt wird, und in welchem der benannte Benutzer durch Ermittlung der persönlichen unwillkürlichen Augenbewegungen beim Betrachten des benannten Bildes ermittelt wird.

3. Biometrisches Identifizierung- und/oder Authentifizierungs- . verfahren gemäss einem der vorhergehenden Ansprüche, in welchem dem Benutzer (1) eine Bildsequenz vorgestellt wird, und in welchem der benannte Benutzer durch Ermittlung der persönlichen unwillkürlichen Augenbewegungen beim Betrachten der benannten Bildsequenz ermittelt wird.

4. Biometrisches Identifizierung- und/oder Authentifizierungsverfahren gemäss einem der Ansprüche 2 oder 3, in welchem das benannte Bild (5) mit einer virtuellen retinalen Anzeigevorrichtung (21) wiedergegeben wird.

5. Biometrisches Identifizierung- und/oder Authentifizierungsverfahren gemäss dem vorhergehenden Anspruch, in welchem die benannten Augenrichtungstrajektorien (51) Saccaden (54) enthalten.

6. Biometrisches Identifizierung- und/oder Authentifizierungsverfahren gemäss einem der vorhergehenden Ansprüche, **dadurch gekennzeichnet, dass** der benannte Benutzer (1) durch Ermittlung von Augenfokalisierungsmustern identifiziert und/oder authentifiziert wird.

7. Biometrisches Identifizierung- und/oder Authentifizierungsverfahren gemäss einem der vorhergehenden Ansprüche, **dadurch gekennzeichnet, dass** der benannte Benutzer (1) durch Ermittlung von persönlichen Variationen im Pupillendiameter identifiziert und/oder authentifiziert wird.

8. Biometrisches Identifizierung- und/oder Authentifizierungsverfahren gemäss dem vorhergehenden Anspruch, in welchem die benannten Variationen durch Änderungen der Lichtverhältnisse verursacht werden.

9. Biometrisches Identifizierung- und/oder Authentifizierungsverfahren gemäss dem Anspruch,7, in welchem dem Benutzer mindestens eine vordefinierte Bildsequenz vorgestellt wird, und in welchem der benannte Benutzer durch Ermittlung der benannten Variationen beim Bildwechsel identifiziert und/oder authentifiziert wird.

10. Biometrisches identifizierung- und/oder Authentifizierungsverfahren gemäss einem der vorhergehenden Ansprüche, **dadurch gekennzeichnet, dass** der benannte Benutzer (1) durch Ermittlung von persönlichen Biinzeibewegungsmustern identifiziert und/oder authentifiziert wird.

11. Biometrisches Identifizierung- und/oder Authentifizierungsverfahren gemäss dem vorhergehenden Anspruch, in welchem die benannten Blinzelbewegungsmuster durch Änderungen der Lichtverhältnisse verursacht werden.

12. Biometrisches Identifizierung- und/oder Authentifizierungsverfahren gemäss dem Anspruch 10, in welchem dem Benutzer (1) mindestens eine vordefinierte Bildsequenz vorgestellt wird, und in welchem der benannte Benutzer durch Ermittlung der benannten Blinzelbewegungsmuster beim Bildwechsel identifiziert und/oder authentifiziert wird.

13. Biometrisches Identifizierung- und/oder Authentifizierungsverfahren gemäss einem der vorhergehenden Ansprüche, **dadurch gekennzeichnet, dass** bei der Ermittlung der benannten Augenbewegungen Bewegungen beider Augen berücksichtigen werden.

14. Biometrisches Identifizierung- und/oder Authentifizierungsverfahren gemäss einem der vorhergehenden Ansprüche, **dadurch gekennzeichnet, dass** die benannten Augenbewegungen in Vergleichsdaten codiert werden und mit in einer Referenzdatenbank (40) abgelegten Referenzdaten verglichen werden.

15. Biometrisches Verfahren gemäss dem vorhergehenden Anspruch, in welchem der Vergleich zwischen den benannten ermittelten Vergleichsdaten und den benannten in einer Referenzdatenbank (40) abgelegten Referenzdaten mit einem Viterbi-Gitter durchgeführt wird.

16. Verfahren gemäss einem der vorhergehenden Ansprüche, in welchem ein von der Körpertemperatur abhängiger Parameter gemessen wird und als zusätzlicher Authentifizierungsparameter verwendet wird.

17. Verfahren gemäss einem der vorhergehenden Ansprüche, in welchem ein von der Erwärmung der Retina abhängiger Parameter gemessen und als zusätzlicher Authentifizierungsparameter verwendet wird.

18. Verfahren gemäss einem der vorhergehenden Ansprüche, in welchem die Reaktion der Iris auf Lichtvariationen gemessen wird und als zusätzlicher Authentifizierungsparameter verwendet wird.

19. Verfahren gemäss einem der vorhergehenden Ansprüche, in welchem die benannten Augenbewegungen durch ein tragbares Terminal (2) ermittelt werden und durch ein Mobilfunkteil (24) im benannten Terminal über ein Mobilfunknetz (3) an einen Fernserver (4) übertragen werden.

20. Verfahren gemäss dem vorhergehenden Anspruch, in welchem der benannte Server (4) von einem Dienstanbieter verwaltet wird, und in welchem die Verbindung zwischen dem benannten Mobilfunkteil (24) und dem benannten Server (4) End-zu-End verschlüsselt wird.

21. Verfahren gemäss einem der Ansprüche 19 oder 20, in welchem die benannten Augenbewegungen elektronisch signiert werden.

22. Verfahren gemäss dem vorhergehenden Anspruch, in welchem die benannten Augenbewegungen mit dem privaten Schlüssel des benannten Benutzers elektronisch signiert werden.

23. Verfahren gemäss dem vorhergehenden Anspruch, in welchem Augenbewegungen verursacht werden, beispielsweise indem spezielle Bilder oder Bildersequenzen vorgestellt werden,
und die Reaktion auf diese Bilder oder Bildersequenzen, beispielsweise die Variationen des Pupillendiameters oder das Blinzeln, wird als Muster ermittelt.

24. Verfahren, um den Benutzer eines Terminals (2) für eine Transaktion mit einem Server (4) zu identifizieren und/oder zu authentifizieren,
wobei das benannte Terminal (2) ein Kommunikationsteil (24) und ein Augenbewegungsermittlungsmodul (20) enthält, wobei das benannte Kommunikationsteil (24) eine Chipkarte mit einer Chipkartenidentifizierung enthält,
wobei das benannte Terminal (2) Instruktionen für die benannte Transaktion über ein Kommunikationsnetz (3) an den benannten Server (4) sendet,
wobei der benannte Server (4) den Benutzer (1) anhand der benannten Identifizierung und durch Ermittlung von persönlichen Augenrichtungstrajektorien, einschliesslich unwillkürlicher Augenbewegungen identifiziert und/oder authentifiziert.

25. Terminal (2), das **dadurch gekennzeichnet ist,**
**dass** es Mittel (20, 23) zur Ermittlung von persönlichen Augenrichtungstrajektorien, einschliesslich unwillkürlicher Augenbewegungen umfasst,
**dass** es Mittel (23) zur Codierung der benannten Augenbewegungen umfasst,
und **dass** es Mittel (24) zur Sendung der benannten codierten Augenbewegungen an einen Fernserver (4) umfasst.

26. Terminal (2) gemäss dem vorhergehenden Anspruch, das eine virtuelle retinale Anzeigevorrichtung (21) umfasst.

## Claims

1. Biometric identification and/or authentication method for identifying and/or authenticating the user (1) of a terminal (2), **characterized in that** said user is identified and/or authenticated by determining personal eye direction trajectories, including involuntary eye movements, with an eye-movement detection module (20).

2. Biometric identification and/or authentication method according to the preceding claim, wherein at least one pre-defined image (5) is presented to the user (1), and wherein said user is determined by determining personal eye movement patterns when viewing said image.

3. Biometric identification and/or authentication method according to one of the preceding claims, wherein an image sequence is presented to the user (1) and wherein said user is determined by determining personal eye movement patterns when viewing said image sequence.

4. Biometric identification and/or authentication method according to one of the claims 2 or 3, wherein said image (5) is reproduced with a virtual retinal display (21).

5. Biometric identification and/or authentication method according to the preceding claim, wherein said eye direction trajectories (51) contain saccades (54).

6. Biometric identification and/or authentication method according to one of the preceding claims, **characterized in that** said user (1) is identified and/or authenticated by determining eye focalization patterns.

7. Biometric identification and/or authentication method according to one of the preceding claims, **characterized in that** said user (1) is identified and/or authenticated by determining personal variations in the pupil's diameter.

8. Biometric identification and/or authentication method according to the preceding claim, wherein said variations are caused through changes in the light conditions.

9. Biometric identification and/or authentication method according to claim 7, wherein at least one pre-defined image sequence is presented to the user and wherein said user is identified and/or authenticated by determining said variations when the image changes.

10. Biometric identification and/or authentication method according to one of the preceding claims, **characterized in that** said user (1) is identified and/or authenticated by determining personal blinking movement patterns.

11. Biometric identification and/or authentication method according to the preceding claim, wherein said blinking movements are caused through changes in the light conditions.

12. Biometric identification and/or authentication method according to claim 10, wherein at least one pre-defined image sequence is presented to the user (1) and wherein said user is identified and/or authenticated by determining said blinking movements when the image changes.

13. Biometric identification and/or authentication method according to one of the preceding claims, **characterized in that** for determining said eye movements the movements of both eyes are taken into account.

14. Biometric identification and/or authentication method according to one of the preceding claims, **characterized in that** said eye movements are encoded in comparison data and compared with reference data stored in a reference database (40).

15. Biometric method according to the preceding claim, wherein the comparison between said determined comparison data and said reference data stored in a reference database (40) is performed with a Viterbi-grid.

16. Method according to one of the preceding claims, wherein a parameter dependent on the body temperature is measured and used as additional authentication parameter.

17. Method according to one of the preceding claims, wherein a parameter dependent on the warming of the retina is measured and used as additional authentication parameter.

18. Method according to one of the preceding claims, wherein the reaction of the iris to light variations is measured and used as additional authentication parameter.

19. Method according to one of the preceding claims, wherein said eye movements are determined through a portable terminal (2) and transmitted through a mobile radio part (24) in said terminal over a mobile radio network (3) to a remote server (4).

20. Method according to the preceding claim, wherein said server (4) is administered by a service provider and wherein the connection between said mobile radio part (24) and said server (4) is encrypted end-to-end.

21. Method according to one of the claims 19 or 20, wherein said eye movements are signed electronically.

22. Method according to the preceding claim, wherein said eye movements are signed electronically with said user's private key.

23. Method according to the preceding claim, wherein eye movements are caused, for example by special images or image sequences being presented,
and the reaction to these images or image sequences, for example the variations in the pupil's diameter or blinking, are determined as pattern.

24. Method for identifying and/or authenticating the user of a terminal (2) for a transaction with a server (4),
said terminal (2) comprising a communication part (24) and an eye-movement detection module (20), said mobile radio part (24) comprising a chip-card with a chip-card identification,
said terminal (2) sending instructions for said transaction over a communication network (3) to said server (4),
said server (4) identifying and/or authenticating the user (1) on the basis of said identification and by determining personal eye direction trajectories, including involuntary eye movements.

25. Terminal (2), **characterized in that**
it comprises means (20, 23) for determining personal eye direction trajectories, including involuntary eye movements,
it comprises means (23) for encoding said eye movements,
and it comprises means (24) for sending said encoded eye movements to a remote server (4).

26. Terminal (2) according to the preceding claim, comprising a virtual retinal display device (21).

## Revendications

1. Procédé d'identification et/ou d'authentification biométrique pour identifier et/ou authentifier l'utilisateur (1) d'un terminal (2), **caractérisé en ce que** ledit utilisateur est identifié et/ou authentifié par la détermination de trajectoires personnelles de la direction de l'oeil, y compris des mouvements involontaires de l'oeil, avec un module de détermination du mouvement de l'oeil (20).

2. Procédé d'identification et/ou d'authentification biométrique selon la revendication précédente, dans lequel au moins une image (5) prédéfinie est présentée à l'utilisateur (1), et dans lequel ledit utilisateur est déterminé par la détermination des mouvements de l'oeil involontaires personnels lors de l'observation de ladite image.

3. Procédé d'identification et/ou d'authentification biométrique selon l'une des revendications précédentes, dans lequel une séquence d'images est présentée à l'utilisateur (1), et dans lequel ledit utilisateur est déterminé par la détermination des mouvements de l'oeil involontaires personnels lors de l'observation de ladite séquence d'images.

4. Procédé d'identification et/ou d'authentification biométrique selon l'une des revendications 2 ou 3, dans lequel ladite image (5) est reproduite avec un dispositif d'affichage rétinien virtuel (21).

5. Procédé d'identification et/ou d'authentification biométrique selon la revendication précédente, dans lequel lesdites trajectoires de la direction de l'oeil (51) comprennent des saccades (54).

6. Procédé d'identification et/ou d'authentification biométrique selon l'une des revendications précédentes, **caractérisé en ce que** ledit utilisateur (1) est identifié et/ou authentifié par la détermination d'échantillons de focalisation de l'oeil.

7. Procédé d'identification et/ou d'authentification biométrique selon l'une des revendications précédentes, **caractérisé en ce que** ledit utilisateur (1) est identifié et/ou authentifié par la détermination de variations personnelles dans le diamètre de la pupille.

8. Procédé d'identification et/ou d'authentification biométrique selon la revendication précédente, dans lequel lesdites variations sont provoquées par des variations des proportions de lumière.

9. Procédé d'identification et/ou d'authentification biométrique selon la revendication 7, dans lequel au moins une séquence d'images est présentée à l'utilisateur, et dans lequel ledit utilisateur est identifié et/ou authentifié par la détermination desdites variations lors du changement d'images.

10. Procédé d'identification et/ou d'authentification biométrique selon l'une des revendications précédentes, **caractérisé en ce que** ledit utilisateur (1) est identifié et/ou authentifié par la détermination d'échantillons personnels de mouvements de clignement.

11. Procédé d'identification et/ou d'authentification biométrique selon la revendication précédente, dans lequel lesdits échantillons de mouvements de clignement sont provoqués par des modifications des proportions de lumière.

12. Procédé d'identification et/ou d'authentification biométrique selon la revendication 10, dans lequel au moins une séquence d'images prédéfinie est présentée à l'utilisateur, et dans lequel ledit utilisateur est identifié et/ou authentifié par la détermination desdits échantillons de mouvements de clignement lors du changement d'images.

13. Procédé d'identification et/ou d'authentification biométrique selon l'une des revendications précédentes, **caractérisé en ce que** lors de la détermination desdits mouvements de l'oeil, des mouvements des deux yeux sont considérés.

14. Procédé d'identification et/ou d'authentification biométrique selon l'une des revendications précédentes, **caractérisé en ce que** lesdits mouvements de l'oeil sont codés en données de comparaison et sont comparés avec des données de référence stockées dans une banque de données de référence (40).

15. Procédé biométrique selon la revendication précédente, dans lequel la comparaison entre lesdites données de comparaison déterminées et lesdites données de référence stockées dans une banque de données de référence (40) est effectuée avec une grille de Viterbi.

16. Procédé selon l'une des revendications précédentes, dans lequel un paramètre dépendant de la température du corps est mesuré et est utilisé comme paramètre d'authentification supplémentaire.

17. Procédé selon l'une des revendications précédentes, dans lequel un paramètre dépendant du réchauffement de la rétine est mesuré et utilisé comme paramètre d'authentification supplémentaire.

18. Procédé selon l'une des revendications précédentes, dans lequel la réaction de l'iris à des variations de lumière est mesuré et est utilisé comme paramètre d'authentification supplémentaire.

19. Procédé selon l'une des revendications précédentes, dans lequel lesdits mouvements de l'oeil sont déterminés par un terminal portable (2) et sont retransmis à un serveur distant (4) à travers un réseau radiomobile (3) par un élément radiomobile (24) dans ledit terminal.

20. Procédé selon la revendication précédente, dans lequel ledit serveur (4) est géré par un fournisseur de services, et dans lequel la communication entre ledit élément radiomobile (24) et ledit serveur (4) est cryptée de bout en bout.

21. Procédé selon l'une des revendications 19 ou 20, dans lequel lesdits mouvements de l'oeil sont signés électroniquement.

22. Procédé selon la revendication précédente, dans lequel lesdits mouvements de l'oeil sont signés électroniquement avec la clé privée dudit utilisateur.

23. Procédé selon la revendication précédente, dans lequel des mouvements de l'oeil sont provoqués, par exemple en ce que des images ou des séquences d'images spécifiques sont présentées,
et la réaction à ces images ou séquences d'images, par exemple les variation du diamètre de la pupille ou le clignement, est déterminée comme échantillon.

24. Procédé pour identifier et/ou authentifier l'utilisateur d'un terminal (2) pour une transaction avec un serveur (4),
ledit terminal (2) contenant un élément de communication (24) et un module de détermination des mouvements de l'oeil, ledit élément de communication (24) contenant une carte à puce avec une identification de carte à puce,
ledit terminal (2) émettant des instructions pour ladite transaction audit serveur (4) à travers un réseau de communication (3),
ledit serveur (4) identifiant et/ou authentifiant l'utilisateur (1) au moyen de ladite identification et par la détermination de trajectoires personnelles de la direction de l'oeil, y compris de mouvements involontaires de l'oeil.

25. Terminal (2), qui est **caractérisé**
**en ce qu'**il comprend des moyens (20, 23) pour la détermination de trajectoires personnelles de la direction de l'oeil, y compris de mouvements involontaires de l'oeil,
**en ce qu'**il comprend de moyens (23) pour le codage desdits mouvements de l'oeil,
et **en ce qu'**il comprend des moyens (24) pour l'émission desdits mouvements de l'oeil codés à un serveur distant (4).

26. Terminal (2) selon la revendication précédente, qui comprend un dispositif d'affichage rétinien virtuel (21).
